**Europäisches Patentamt**

**European Patent Office**

**Office européen des brevets**

(19)

(11) Veröffentlichungsnummer : **0 067 940**
**B1**

# (12) EUROPÄISCHE PATENTSCHRIFT

(45) Veröffentlichungstag der Patentschrift :
04.07.84

(21) Anmeldenummer : 82103495.6

(22) Anmeldetag : 24.04.82

(51) Int. Cl.³ : **C 02 F   1/04, C 02 F   5/08**

(54) **Meerwasserentsalzungsanlage.**

(30) Priorität : **19.06.81 DE 3124111**

(43) Veröffentlichungstag der Anmeldung :
**29.12.82 Patentblatt 82/52**

(45) Bekanntmachung des Hinweises auf die Patenterteilung : **04.07.84 Patentblatt 84/27**

(84) Benannte Vertragsstaaten :
**FR GB IT NL**

(56) Entgegenhaltungen :
**DE-A- 2 164 240**
**DE-B- 1 238 939**
**US-A- 3 203 873**
**US-A- 4 218 290**

(73) Patentinhaber : **Taprogge Gesellschaft mbH**
**Wacholderstrasse 7**
**D-4000 Düsseldorf 31 (DE)**

(72) Erfinder : **Eimer, Klaus, Dipl.-Ing.**
**Hölender Weg 11**
**D-4030 Ratingen 6 (DE)**
Erfinder : **Freund, Wolfgang, Ing.**
**Speestrasse 133**
**D-4030 Ratingen 4 (DE)**
Erfinder : **Patzig, Dieter, Ing.**
**Ketteler Strasse 13**
**D-4030 Ratingen 1 (DE)**

(74) Vertreter : **Andrejewski, Walter et al**
**Patentanwälte Andrejewski, Honke & Partner Post-**
**fach 10 02 54 Theaterplatz 3**
**D-4300 Essen 1 (DE)**

EP 0 067 940 B1

## Beschreibung

Die Erfindung bezieht sich gattungsgemäß auf eine Meerwasserentsalzungsanlage, mit einer Mehrzahl von Röhrenwärmetauscherstufen mit je einem Röhrenwärmetauscher und Röhrenreinigungseinrichtung, wobei die Röhren der Röhrenwärmetauscherstufen von Kühlwasser durchflossen und die Röhrenwärmetauscherstufen durch ein Kühlwasserleitungssystem in bezug auf die Kühlwasserströmung hintereinandergeschaltet sind, wobei ferner die mit Reinigungskörpern arbeitende Röhrenreinigungseinrichtung im Kühlwasserzulauf vor der Wärmetauscheranlage eine Reinigungskörperaufgabe, im Kühlwasserablauf hinter der Wärmetauscheranlage einen Reinigungskörperabzug mit Abzugssieb aufweist, wobei außerdem der Reinigungskörperabzug sowie die Reinigungskörperaufgabe über ein Reinigungsleitungssystem mit Reinigungskörperschleuse und Pumpe verbunden sind, welche Reinigungskörperschleuse ein Fangsieb für die Reinigungskörper mit dem Fangsieb vorgeschalteter Schleusenkammer und dem Fangsieb nachgeschalteter Schleusenkammer besitzt und welches Reinigungsleitungssystem einerseits eine vom Reinigungskörperabzug zur vorgeschalteten Schleusenkammer führende Warmwasserleitung sowie eine an die nachgeschaltete Schleusenkammer angeschlossene Warmwasserrückführleitung sowie außerdem eine vom Bereich der Reinigungskörperaufgabe zur Reinigungskörperschleuse führende Kaltwasserleitung und eine aus der vorgeschalteten Schleusenkammer zur Reinigungskörperaufgabe zurückgeführte Kaltwasser- und damit Reinigungskörperrückführleitung aufweist, wobei endlich die Röhrenreinigungseinrichtung durch Umschaltung von zum Reinigungsleitungssystem gehörenden Ventilen auf Reinigen und Fangen umschaltbar ist. Die Reinigungskörper sind beispielsweise Schwammgummikugeln, die durch den Wasserdruck durch die Röhren der Röhrenwärmetauscher gedrückt werden. Bei den (aus der Praxis) bekannten Wärmetauscheranlagen können nur alle Röhrenwärmetauscherstufen gleichzeitig gereinigt werden. Dabei wird diskontinuierlich gearbeitet, Fangen und Reinigen erfolgt abwechselnd. Es ist gleichsam nur der einheitliche Röhrenwärmetauscher einer bekannten Ausführungsform (DE-PS 12 38 939) durch ein Aggregat aus mehreren Röhrenwärmetauscherstufen ersetzt. Bei der bekannten Ausführungsform befindet sich die Pumpe in der Kaltwasserleitung. Sie arbeitet nur, wenn die von dem Kaltwasser kommenden, vor dem Fangsieb gefangenen Reinigungskörper über die Kaltwasser- und damit Reinigungskörperrückführleitung zur Reinigungskörperaufgabe zurückgeführt werden. Für den Transport der Reinigungskörper über die Warmwasserleitung zur Schleusenkammer und für die Rückführung des Warmwassers über die Warmwasserrückführleitung wird der Differenzdruck in dem Abflußleitungssystem verwendet. Das kann zu Schwierigkeiten führen, wenn sich dieser Differenzdruck wegen unterschiedlicher Betriebsverhältnisse ändert. Andererseits werden bei der Meerwasserentsalzung die Röhrenwärmetauscherstufen häufig mit unterschiedlicher Leistung ausgelegt und betrieben, was zu unterschiedlichen Beanspruchungen der Röhrenwärmetauscherstufen führt und die Möglichkeit der Röhrenreinigung in einzelnen Röhrenwärmetauscherstufen zweckmäßig erscheinen läßt. Bei Meerwasserentsalzungsanlagen wird das Meerwasser oder Brackwasser als sogenanntes Rohwasser zugeführt. Es funktioniert in den Röhrenwärmetauscherstufen zunächst als Kühlwasser, wird aber später in einer weiteren Röhrenwärmetauscherstufe aufgeheizt. Bezüglich der Einzelheiten wird auf das Ausführungsbeispiel verwiesen, wo auch dargelegt ist, warum gerade in diesem Fall die einzelnen Röhrenwärmetauscherstufen zweckmäßigerweise unabhängig voneinander gereinigt werden müssen.

Der Erfindung liegt die Aufgabe zugrunde, eine bekannte Meerwasserentsalzungsanlage so weiter auszubilden, daß die Röhren einzelner Röhrenwärmetauscherstufen nach Maßgabe der betrieblichen Verhältnisse separat gereinigt werden können. Gleichzeitig sollen die Störungen beseitigt werden, die bei der bekannten Meerwasserentsalzungsanlage auf der Tatsache beruhen, daß für die beschriebene Förderung des Warmwassers über die Warmwasserleitung und Warmwasserrückführleitung ein Differenzdruck des Systems ausgenutzt wird.

Zur Lösung dieser Aufgabe lehrt die Erfindung, daß die Pumpe der Röhrenreinigungseinrichtung in einem Zuführungsstutzen der Reinigungseinrichtung in einem Zuführungsstutzen der Reinigungskörperschleuse angeordnet ist, der in der dem Fangsieb vorgeschalteten Schleusenkammer mündet, daß sowohl die Warmwasserleitung als auch die Kaltwasserleitung vor der Pumpe an den Zuführstutzen angeschlossen sind, und zwar über Ventile auf Warmwasserzuführung und Kaltwasserzuführung und damit Fangen und Reinigen umschaltbar, und daß endlich zumindest ein zusätzliches Reinigungsleitungspaar mit Ventilen für die Zu- und Abschaltung, welches für die Reinigung einer ausgewählten Röhrenwärmetauscherstufe oder für die Reinigung von mehreren zusammengefaßten Röhrenwärmetauscherstufen dient, mit einem vom Kühlwasserleitungssystem abgehenden Leitungszweig ebenfalls vor der Pumpe an den Zuführungsstutzen angeschlossen und mit einem anderen Leitungszweig vor der zu reinigenden Röhrenwärmetauscherstufe bzw. den zu reinigenden Röhrenwärmetauscherstufen in das Kühlwasserleitungssystem wieder eingeführt ist. Im einzelnen bestehen verschiedene Möglichkeiten. Insbesondere läßt sich die Lehre der Erfindung so verwirklichen, daß die Thermodynamik des Sys-

2

tems nicht beeinträchtigt wird, wenn die Röhrenwärmetauscherstufe bzw. die zusammengefaßten Röhrenwärmetauscherstufen mit Hilfe des zusätzlichen Reinigungsleitungspaares gereinigt werden. Dazu lehrt die Erfindung, daß das zusätzliche Reinigungsleitungspaar in das Kühlwasserleitungssystem etwa an der Stelle wieder einmündet, an der es auch abzweigt. Das ist jedoch, je nach den betrieblichen Verhältnissen, nicht immer erforderlich. Im Rahmen der Erfindung liegt daher auch eine Ausführungsform, bei der das zusätzliche Reinigungsleitungspaar zwar vor der zu reinigenden Röhrenwärmetauscherstufe in das Kühlwasserleitungssystem einmündet, jedoch hinter der Wärmetauscherstufe abzweigt.

Die erreichten Vorteile und die Funktionsweise der erfindungsgemäßen Wärmetauscheranlage werden im folgenden anhand einer lediglich ein Ausführungsbeispiel darstellenden Zeichnung ausführlicher erläutert, und zwar am Beispiel einer Meerwasserentsalzungsanlage, die mit Mehrstufen-Entspannungsverdampfung arbeitet.

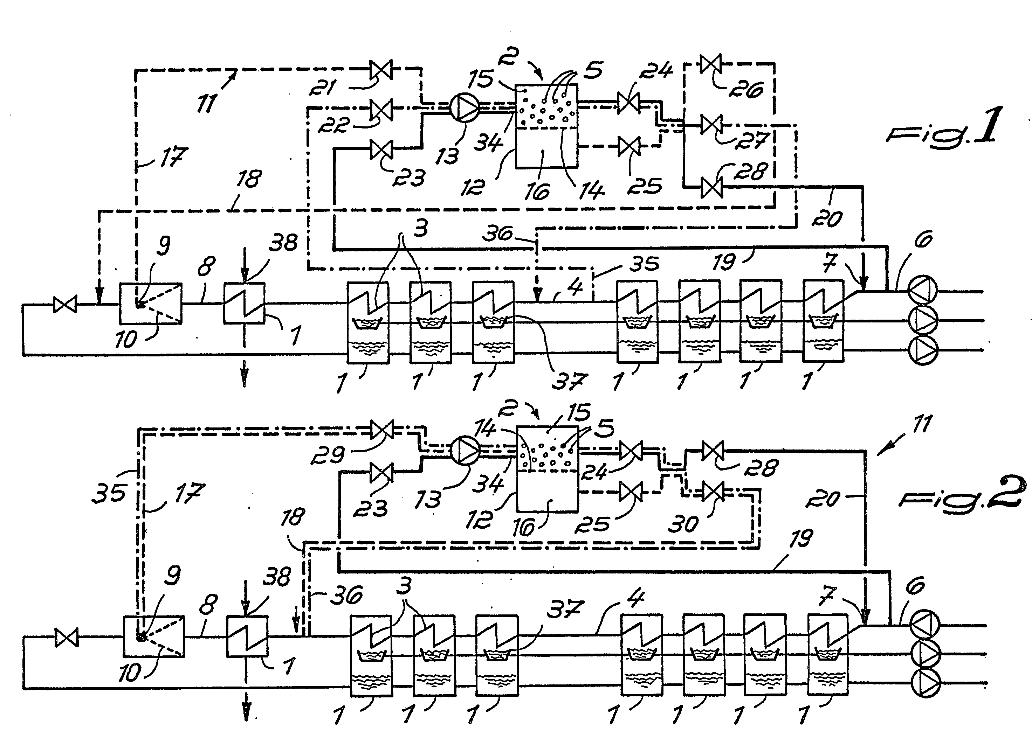

Die Fig. 1 bis 4 zeigen verschiedene Ausführungsformen einer erfindungsgemäßen Anlage.

Betrachtet man die in den Figuren dargestellte Anlage zunächst als Wärmetauscheranlage, so erkennt man eine Mehrzahl von Röhrenwärmetauscherstufen 1 mit je einem Röhrenwärmetauscher und eine Reinigungseinrichtung 2.

Die Röhren 3 der Röhrenwärmetauscherstufen 1 sind von Kühlwasser durchflossen. Die Röhrenwärmetauscherstufen 1 selbst sind durch ein Kühlwasserleitungssystem 4 in bezug auf die Kühlwasserströmung hintereinandergeschaltet. Die mit Reinigungskörpern 5 in Form von Schwammgummikugeln o. dgl. arbeitende Röhrenreinigungseinrichtung 2 besitzt im Kühlwasserzulauf 6 vor der Wärmetauscheranlage eine Reinigungskörperaufgabe 7, im Kühlwasserablauf 8 hinter der Wärmetauscheranlage einen Reinigungskörperabzug 9 mit Abzugssieb 10. Der Reinigungskörperabzug 9 sowie die Reinigungskörperaufgabe 7 sind über ein Reinigungsleitungssystem 11 mit Reinigungskörperschleuse 12 und Pumpe 13 verbunden. Einige der Leitungen des Reinigungsleitungssystems 11 werden später noch spezifiziert. Die Reinigungskörperschleuse 12 besitzt ein Fangsieb 14 für die Reinigungskörper 5 und eine dem Fangsieb 14 vorgeschaltete sowie eine dem Fangsieb 14 nachgeschaltete Schleusenkammer 15, 16. Das Reinigungsleitungssystem 11 besitzt einerseits eine vom Reinigungskörperabzug 9 zur vorgeschalteten Schleusenkammer 15 führende Warmwasserleitung 17 sowie eine an die nachgeschaltete Schleusenkammer 16 angeschlossene Warmwasserrückführleitung 18. Das Reinigungsleitungssystem 11 besitzt fernerhin eine vom Bereich der Reinigungskörperaufgabe 7 zur Reinigungskörperschleuse 12 führende Kaltwasserleitung 19 und eine aus der vorgeschalteten Schleusenkammer 15 zur Reinigungskörperaufgabe 7 zurückgeführte Kaltwasser- und damit Reinigungskörperrückführleitung 20. Die Röhrenreinigungseinrichtung 2 ist durch Umschalten von zum Reinigungssystem gehörenden Ventilen 21 bis 33 auf Reinigen und Fangen umschaltbar, wie weiter unten noch erläutert wird. Zunächst ist wesentlich, daß die Pumpe 13 der Röhrenreinigungseinrichtung 2 in einem Zuführungsstutzen 34 der Reinigungskörperschleuse 12 angeordnet ist, der in der dem Fangsieb 14 vorgeschalteten Schleusenkammer 15 mündet. Sowohl die Warmwasserleitung 17 als auch die Kaltwasserleitung 19 sind vor der Pumpe 13 an den Zuführungsstutzen 34 angeschlossen. Sie sind über Ventile 21, 23 bzw. 23, 29 bzw. 31 auf Warmwasserzuführung und Kaltwasserzuführung und damit Fangen und Reinigen umschaltbar. Im übrigen ist in den Ausführungsbeispielen stets ein zusätzliches Reinigungsleitungspaar 35, 36 mit Ventilen 22, 24, 27, 30, 32, 33 für die Zuschaltung und Abschaltung vorgesehen, welches für die Reinigung einer ausgewählten Röhrenwärmetauscherstufe 1 oder für die Reinigung von mehreren zusammengefaßten Röhrenwärmetauscherstufen 1 bestimmt ist. Dieses Reinigungsleitungspaar ist mit einem vom Kühlwasserleitungssystem 4 abgehenden Leitungszweig 35 ebenfalls vor der Pumpe 13 an den Zuführungsstutzen 34 angeschlossen, mit einem anderen Leitungszweig 36 vor der zu reinigenden Röhrenwärmetauscherstufe 1 bzw. den zu reinigenden Röhrenwärmetauscherstufen 1 in das Kühlwasserleitungssystem 4 wieder eingeführt. Zur Verdeutlichung sind im Reinigungsleitungssystem 11 die das Kaltwasser führenden Leitungen ausgezogen, die das Warmwasser führenden Leitungen gestrichelt und die für die Reinigung ausgewählter Röhrenwärmetauscherstufen vorgesehenen Leitungen strichpunktiert dargestellt worden.

In der Spezifizierung als Meerwasserentsalzungsanlage ist das Kühlwasser zunächst Rohwasser, welches im ersten Teil der Wärmetauscheranlage als Kühlwasser funktioniert, danach aber auch noch aufgeheizt wird und aus dem das Produkt gewonnen wird, welches am Ende auch abgezogen wird. Das behandelte Wasser wird als Abwasser abgeführt. Eine solche Meerwasserentsalzungsanlage mag aus einer Vielzahl, z. B. zwölf bis zweiunddreißig Röhrenwärmetauscherstufen 1 bestehen, in deren Röhrenwärmetauschern das Rohwasser durch den auf der Außenseite der Röhren 3 kondensierenden Dampf erwärmt wird. Der Dampf entsteht durch Entspannung des zu entsalzenden Wassers von Stufe zu Stufe. Das von den Röhren 3 der einzelnen Röhrenwärmetauscherstufen 1 abtropfende Kondensat ist das Produkt. Es wird in Wannen 37 gesammelt und fließt von Stufe zu Stufe. Der Teil der Wärmetauscheranlage, in welchem die Wärme von der verdampfenden Sole auf erwärmende Sole übergeht, heißt Wärmerückgewinnungsteil. Bedingt durch Wärmeübertragungsverluste sowie den Temperaturabfall bei Entspannung der Sole erreicht die aufgewärmte Sole jedoch nicht ganz die Temperatur der zu verdampfenden Sole. Diese Temperaturdifferenz wird in eine gleichsam nachgeschaltete Wärmetauscherstufe 1, dem sogenannten Endvorwärmer, mittels Fremddampf zugeführt, wie im Schema der einzelnen Figuren bei 38 angedeutet ist. Nichtsdestoweniger wird aus terminologischen Gründen im Rahmen der Erfindung bezüglich des Mediums, das durch die Röhren der Röhrenwärmetauscherstufen 1 fließt, stets von Kühlwasser gesprochen und wird auch der Endvorwärmer als Wärmetauscherstufe 1 bezeichnet.

Die maximale Temperatur am Ausgang einer Meerwasserentsalzungsanlage und damit am Ausgang des Endvorwärmers 1 wird hauptsächlich durch chemische Einflüsse begrenzt. Sie beträgt höchstens 120 °C, da oberhalb dieser Temperatur Kalziumsulfat entsteht, welches die Röhren 3 und die übrige Anlage unzulässig stark verkrusten würde. Die bis 120 °C ausfallenden Härtebildner (Kalziumcarbonat und Magnesiumhydroxid) sind durch Wasserzusatzmittel und die vorgesehene Röhrenreinigungseinrichtung 2, die mit umlaufenden Reinigungskörpern 5 arbeitet, zu beherrschen.

Die Verschmutzungsneigung der Röhren 3 in den einzelnen Röhrenwärmetauscherstufen 1 ist bei höheren Soletemperaturen größer als bei niedrigeren. Daher besteht oftmals die Notwendigkeit, diese wärmeren Röhrenwärmetauscherstufen 1 intensiver zu reinigen als die Kälteren. Das geschieht mit geringem Aufwand und praktisch ohne Störung der thermodynamischen Zusammenhänge durch besondere Schaltung und Anordnung des schon erwähnten zusätzlichen Reinigungsleitungspaares 35, 36.

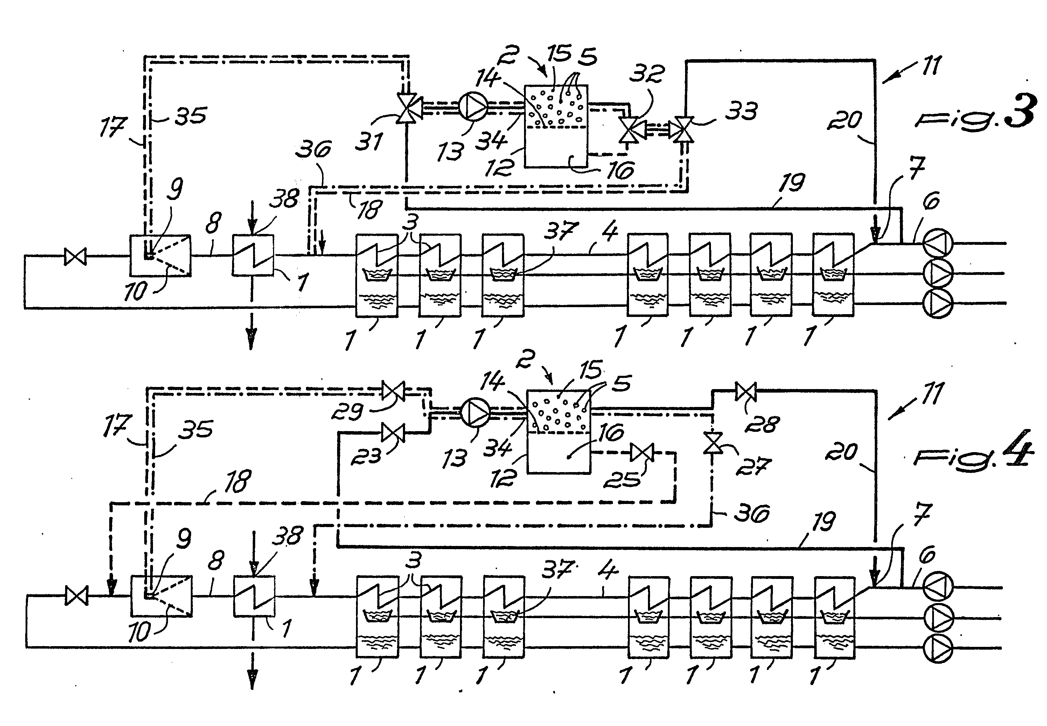

Zunächst erläutert Fig. 1 das Prinzip der erfindungsgemäßen Ausführungsform. Über die einzige Pumpe 13 wird die Reinigungskörperschleuse 12 mittels einer Reihe von Absperrventilen mit der Wärmetauscheranlage verbunden, und zwar so, daß das Wasser an der gleichen Stelle, d. h. bei gleichem Druck und gleicher Temperatur, zurückgeführt werden kann, an der es auch entnommen wurde. Bei der Arbeitsstellung Fangen sind die Ventile 21, 25 und 26 geöffnet. Sollen alle Stufen der Wärmetauscheranlage gereinigt werden, also sowohl der Wärmerückgewinnungsteil als auch der Endvorwärmer 1, so werden die Ventile 23, 24 und 28 geöffnet. Es erfolgt also diskontinuierliches Reinigen abwechselnd mit Fangen. Soll lediglich der heißeste Teil gereinigt werden, so werden die Ventile 22, 24 und 27 geöffnet und die anderen geschlossen. Auch hier erfolgt diskontinuierliches Reinigen abwechselnd mit Fangen. Durch die beschriebenen Maßnahmen ist die Reinigungskörperrückführung völlig unabhängig von Drücken im Kühlwasserleitungssystem 4 und von Druckänderungen in dieser Anlage. Auch entsteht kein störender Einfluß auf die Thermodynamik des systems. Für die drei unterschiedlichen Betriebsweisen, die vorstehend beschrieben worden sind, reicht eine einzige Pumpe 13 aus. Anstelle der Absperrventile 21 bis 28 kann vereinfachend auch eine Schaltung mit entsprechend funktionierenden Dreiwegeventilen 31, 32, 33 Verwendung finden. Soll zusätzlich zur Reinigung aller Röhrenwärmetauscherstufen 1 lediglich die letzte Röhrenwärmetauscherstufe, d. h. der Endvorwärmer besonders intensiv gereinigt werden, so bietet sich die Ausführungsform nach Fig. 2 an. Hier sind bei der Funktionsweise Fangen die Ventile 29, 25 und 30 geöffnet. Beim Reinigen aller Röhrenwärmetauscherstufen 1, einschließlich des Endvorwärmers, sind die Ventile 23, 24 und 28 geöffnet. Soll lediglich der Endvorwärmer 1 gereinigt werden, so öffnet man die Ventile 29, 24 und 30, während die anderen Ventile geschlossen werden. Nunmehr erfolgt ein kontinuierliches Reinigen des Endvorwärmers 38, wobei die Reinigungskörper 5 im Kreislauf geführt werden. Wie die Fig. 3 zeigt, kann bei dieser Ausführungsform auch mit Dreiwegeventilen 31, 32, 33 gearbeitet werden. Äquivalent zu der dargestellten Ausführungsform wäre es, die einzige Pumpe zwischen Dreiwegeventil 32 und Dreiwegeventil 33 anzuordnen. Das Dreiwegeventil 32 könnte in der Reinigungskörperschleuse 12 angeordnet werden, wenn das Fangsieb 14 beispielsweise trichterförmig gestaltet ist und am Fuße des Trichters das Dreiwegeventil 32 vorgesehen wird.

Eine andere Variante ist in der Fig. 4 dargestellt worden. Bei der Funktionsstellung Fangen der Reinigungskörper 5 sind hier die Ventile 29 und 25 geöffnet, die Absperrventile darstellen. Sollen alle Röhrenwärmetauscherstufen 1 gleichzeitig gereinigt werden, so öffnet man die Ventile 23 und 28, soll lediglich der Endvorwärmer 1 gereinigt werden, so werden die Ventile 29 und 27 geöffnet.

Die Ausführungsform nach den Fig. 2 bis 4 wird insbes. dann angewendet, wenn lediglich der Endvorwärmer 1 oder der Endvorwärmer 1 und wenige Stufen des vorgeschalteten Aggregates mit einer Mehrzahl von Röhrenwärmetauscherstufen 1 intensiv zu reinigen sind, und zwar zusätzlich zu einer Reinigung für die Gesamtanlage. Wird lediglich der Endvorwärmer 1 intensiv gereinigt, so entsteht durch die Einspeisung des Wassers, das hinter dem Endvorwärmer 1 entnommen wird, vor dem Endvorwärmer 1 offenbar praktisch kein thermodynamischer Verlust. Werden die Endvorwärmer 1 und zusätzlich sehr wenige Stufen des vorgeschalteten Aggregates aus mehreren Röhrenwärmetauscherstufen 1 im Wärmerückgewinnungsteil der Meerwasserentsalzungsanlage intensiv gereinigt, so entsteht zwar ein geringer thermodynamischer Verlust, dieser kann jedoch toleriert werden.

**Ansprüche**

1. Meerwasserentsalzungsanlage, mit einer Mehrzahl von Röhrenwärmetauscherstufen mit je einem Röhrenwärmetauscher und Röhrenreinigungseinrichtung, wobei die Röhren der Röhrenwärmetauscherstufen von Kühlwasser durchflossen und die Röhrenwärmetauscherstufen durch ein Kühlwasserleitungssystem in bezug auf die Kühlwasserströmung hintereinandergeschaltet sind, wobei ferner die mit Reinigungskörpern arbeitende Röhrenreinigungseinrichtung im Kühlwasserzulauf vor der Wärmetauscheranlage eine Reinigungskörperaufgabe, im Kühlwasserablauf hinter der Wärmetauscheranlage einen Reinigungskörperabzug mit Abzugssieb aufweist, wobei außerdem der Reinigungskörperabzug sowie die Reinigungskörperaufgabe über ein Reinigungsleitungssystem mit Reinigungskörperschleuse und Pumpe verbunden sind, welche Reinigungskörperschleuse ein Fangsieb für die Reinigungskörper mit dem Fangsieb vorgeschalteter Schleusenkammer und dem Fangsieb nachgeschalteter Schleusenkammer besitzt und welches Reinigungsleitungssystem einerseits eine vom Reinigungskörperabzug zur vorgeschalteten Schleusenkammer führende Warmwasserleitung sowie eine an die nachgeschaltete Schleusenkammer angeschlossene Warmwasserrückführleitung sowie außerdem eine vom Bereich der Reinigungskörperaufgabe zur Reinigungskörperschleuse führende Kaltwasserleitung und eine aus der vorgeschalteten Schleusenkammer zur Reinigungskörperaufgabe zurückgeführte Kaltwasser- und damit Reinigungskörperrückführleitung aufweist, wobei endlich die Röhrenreinigungseinrichtung durch Umschaltung von zum Reinigungsleitungssystem gehörenden Ventilen auf Reinigen und Fangen umschaltbar ist, dadurch gekennzeichnet, daß die Pumpe (13) der Röhrenreinigungseinrichtung (2) in einem Zuführungsstutzen (34) der Reinigungskörperschleuse (12) angeordnet ist, der in der dem Fangsieb (14) vorgeschalteten Schleusenkammer (15) mündet, daß sowohl die Warmwasserleitung (17) als auch die Kaltwasserleitung (19) vor der Pumpe (13) an den Zuführungsstutzen (34) angeschlossen sind, und zwar über Ventile (21, 23, 24, 25, 26, 28, 30, 31, 32, 33) auf Warmwasserzuführung und Kaltwasserzuführung und damit Fangen und Reinigen umschaltbar, und daß endlich zumindest ein zusätzliches Reinigungsleitungspaar (35, 36) mit Ventilen (22, 27, 29, 30, 31, 32, 33) für die Zuschaltung und Abschaltung, welches für die Reinigung einer ausgewählten Röhrenwärmetauscherstufe (1) mit einem vom Kühlwasserleitungssystem (4) abgehenden Leitungszweig (35) ebenfalls vor der Pumpe (13) an den Zuführungsstutzen (34) angeschlossen und mit einem anderen Leitungszweig (36) vor der zu reinigenden Röhrenwärmetauscherstufe (1) bzw. den zu reinigenden Röhrenwärmetauscherstufen in das Kühlwasserleitungssystem (4) wieder eingeführt ist.

2. Meerwasserentsalzungsanlage nach Anspruch 1, dadurch gekennzeichnet, daß das zusätzliche Reinigungsleitungspaar (35, 36) in das Kühlwasserleitungssystem (4) etwa an der Stelle wieder einmündet, an der es auch abzweigt.

3. Meerwasserentsalzungsanlage nach Anspruch 1, dadurch gekennzeichnet, daß das zusätzliche Reinigungsleitungspaar (35, 36) zwar vor der zu reinigenden Röhrenwärmetauscherstufe (1) in das Kühlwasserleitungssystem (4) einmündet, jedoch hinter der Wärmetauscheranlage abzweigt.

**Claims**

1. A sea-water desalination plant, with a plurality of tubular heat exchanger stages each with a tubular heat exchanger and a tube cleaning appliance, in which cooling water flows through the tubes of the tubular heat exchanger stages, and the tubular heat exchanger stages are series connected by a cooling water pipe system in respect of the flow of cooling water, in which moreover the tube cleaning appliance, that operates with cleaning bodies, possesses a cleaning bodies infeed in the cooling water supply before the heat exchanger plant and a cleaning bodies offtake with offtake sieve in the cooling water outlet from the heat exchanger plant, in which also the cleaning bodies offtake and the cleaning bodies infeed are connected together by a cleaning pipe system with a cleaning bodies lock and pump, which cleaning bodies lock possesses a collecting sieve for the cleaning bodies with a lock chamber situated before the collecting sieve and a lock chamber situated after the collecting sieve, and which cleaning pipe system possesses on one hand a hot water pipe leading from the cleaning bodies offtake to the lock chamber situated before the collection sieve and a hot water return pipe attached to the lock chamber situated after the collecting sieve, and on the other hand a cold water pipe leading from the area of the cleaning bodies infeed to the cleaning bodies lock and a cold water plus cleaning bodies return pipe leading back from the lock chamber situated before the collecting sieve to the cleaning bodies infeed, and in which the tube cleaning appliance can be changed over from cleaning to collecting by change-over valves that form part of the cleaning pipe system, characterized in that pump (13) of the tube cleaning appliance (2) is located in a short feed pipe (34) of the cleaning bodies lock (12) which opens out into the lock chamber (15) situated before the collecting sieve (14), that both the hot water pipe (17) and the cold water pipe (19) are attached to the short feed pipe (34) before pump (13), and accordingly can be changed over from admission of hot water to admission of cold water, and thereby from collecting to cleaning, by valves (21, 23, 24, 25, 26, 28, 30, 31, 32, 33), and that finally the tube cleaning appliance possesses at least two additional cleaning pipes (35, 36) with valves (22, 27, 29, 30, 31, 32, 33) for opening and closing them, one of which (35) leads off from the cooling water pipe system (4) and is also attached to the short feed pipe (34) before pump (13) and the other of which (36) feeds back into the cooling water pipe system (4) before the tubular heat exchanger stage (1) or stages to be cleaned.

2. A sea-water desalination plant according to Claim 1, characterized in that one of the additional cleaning pipes (35, 36) re-enter the cooling water pipe system (4) at the approximate position from which the other additional pipe (35) branches off.

3. A sea-water desalination plant according to Claim 1, characterized in that although one of the additional cleaning pipes (36) opens out into the cooling water pipe system (4) before the tubular heat exchanger stage (1) to be cleaned, the other additional cleaning pipe (35) branches off after the heat exchanger plant.

**Revendications**

1. Installation de dessalement de l'eau de mer comprenant une pluralité d'étages échangeurs de chaleur tubulaires avec respectivement un échangeur de chaleur tubulaire et un dispositif de nettoyage des tubes, les tubes des étages échangeurs de chaleur tubulaires étant traversés par l'eau de refroidissement et les étages échangeurs de chaleur tubulaires étant montés en série par un système de conduites d'eau de refroidissement par rapport à la circulation de l'eau de refroidissement ; le dispositif de nettoyage des tubes, fonctionnant avec des produits de lavage, présentant un organe de chargement de produits de lavage en amont du système échangeur de chaleur, et une évacuation de produits de lavage avec un tamis d'évacuation disposée dans la conduite d'écoulement de l'eau de refroidissement, en aval du système échangeur de chaleur ; en outre, la sortie et l'entrée des produits de lavage étant reliées par l'intermédiaire d'un système de conduites de nettoyage avec sas de produits de lavage et pompe, lequel sas de produits de lavage comprend un tamis de retenue pour les produits de lavage avec une chambre de sas en amont et une chambre de sas en aval du tamis de retenue, et lequel système de conduites de nettoyage présente, d'une part, une conduite d'eau chaude conduisant de l'évacuation des produits de lavage à la chambre amont du sas ainsi qu'une conduite de retour d'eau chaude raccordée à la chambre aval du sas et, d'autre part, une conduite d'eau froide conduisant de la région du chargement des produits de lavage au sas de produits de lavage et une conduite de retour d'eau froide et donc de produits de lavage passant de la chambre amont du sas à l'organe de chargement de produits de lavage ; le dispositif de nettoyage des tubes pouvant enfin être commuté sur nettoyage et sur retenue par la commutation de vannes associées au système de conduites de nettoyage, caractérisée par le fait que la pompe (13) du dispositif de nettoyage des tubes (2) est montée dans une tubulure d'alimentation (34) du sas de produits de lavage (12), qui débouche dans la chambre (15) du sas située en amont du tamis de retenue (14), que la conduite d'eau chaude (17) aussi bien que la conduite d'eau froide (19) sont raccordées à la tubulure d'alimentation (34), en amont de la pompe (13), à savoir par l'intermédiaire de vannes (21, 23, 24, 25, 26, 28, 30, 31, 32, 33) sur l'arrivée d'eau chaude et sur l'arrivée d'eau froide, permettant ainsi une commutation entre les opérations de retenue et de nettoyage, et que, enfin, au moins une paire de conduites de nettoyage supplémentaires (35, 36) munies de vannes (22, 27, 29, 30, 31, 32, 33) pour la mise en circuit et la mise hors circuit, qui servent au nettoyage d'un étage échangeur de chaleur tubulaire (1) sélectionné, sont raccordées, également en amont de la pompe (13), à la tubulure d'alimentation (34) au moyen d'une dérivation (35) partant du système de conduites d'eau de refroidissement (4), et ramenées, par une autre dérivation (36), audit système (4), en amont de l'étage échangeur de chaleur tubulaire (1) à nettoyer ou des étages échangeurs de chaleur tubulaires à nettoyer.

2. Installation de dessalement de l'eau de mer selon la revendication 1, caractérisée par le fait que la paire de conduites de nettoyage supplémentaires (35, 36) débouchent à nouveau dans le système de conduites d'eau de refroidissement (4), à savoir à peu près à l'endroit d'où elles sont parties.

3. Installation de dessalement de l'eau de mer selon la revendication 1, caractérisée par le fait que la paire de conduites de nettoyage supplémentaires (35, 36) débouchent dans le système de conduites d'eau de refroidissement (4), en amont de l'étage échangeur de chaleur tubulaire (1) à nettoyer, mais qu'elles en partent en aval de l'installation d'échange de chaleur.

Fig.1

Fig.2

0 067 940

Fig. 3

Fig. 4

0 067 940